# EUROPEAN PATENT SPECIFICATION

(11) **EP 1 347 661 B1**
(45) Date of publication and mention of the grant of the patent: **28.03.2007**
(21) Application number: 03101575.3
(22) Date of filing: 08.02.2002
(51) Int. Cl.: H04Q 7/22

(54) **Visitor portal for supporting data communication from roaming mobile devices**
Besucherportal zur Unterstützung von Datenkommunikation von umherstreifenden mobilen Endgeräten
Portail de visiteur pour l'assistance à la communication des données pour un terminal mobile itinerant

(30) Priority: 08.02.2001 US 267187 P
(43) Date of publication of application: 24.09.2003
(62) Divisional of application: 02075519.5
(73) Proprietor: Starhome GmbH, 8034 Zurich (CH)
(72) Inventor: Raviv, Li-On, 49 727, Petah-Tikva (IL); Wolfman, Shlomo, 45 257, Hod Hasharon (IL); Sofer, Carmel, 90 805, Mevaseret Zion (IL); Biran, Ory, 36 023, Kiryat Tivon (IL)
(74) Representative: Dennemeyer, John James

(56) References cited:
- EP-A- 0 952 539
- WO-A-01/43361
- WO-A-98/47295
- WO-A-99/04582
- US-A- 5 862 203
- US-A- 6 028 838
- US-A- 6 148 197

## Description

The present invention relates to a visitor portal for supporting cellular data communication to roaming mobile telephony devices and to a system for supporting roaming data communication.

### Field of the Invention

The present invention relates to roaming cellular data communication and more particularly but not exclusively to wireless application protocol (WAP) data communication.

### Background of the Invention

Two of the most dynamic and fastest growing technologies in recent years are wireless communications and the Internet. Wireless access to the Internet is currently available from mobile telephones and from laptop computers, and is being developed for other mobile devices such as personal digital assistants (PDAs). The WAP (and i-mode technology) is a leading contender to provide wireless access to data networks. However there are currently numerous limitations to WAP data access.

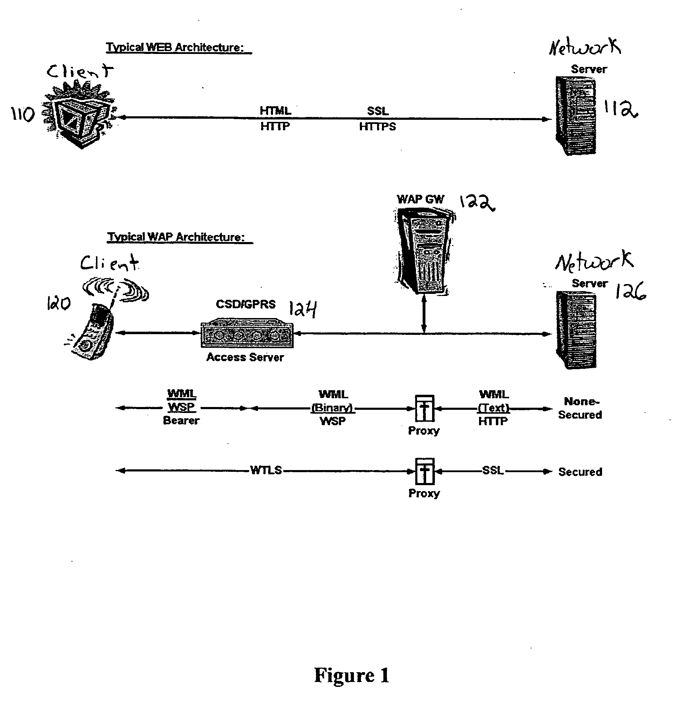

Figure 1 illustrates the difference between typical WAP architecture and the client server model. Under the client server web architecture model, the client 110 and web server 112 are linked directly by the network. Under typical WAP architecture, a WAP gateway 122 located between the access Serves 124 and the network server 126 functions as a proxy gateway. The WAP gateway 122 implements the WAP conversion functionality, converting non-secure data requests from binary wireless session protocol (WSP) to text WSP. Although this proxy is physically static, WAP application servers 124 may be located elsewhere, closer to the mobile terminal.

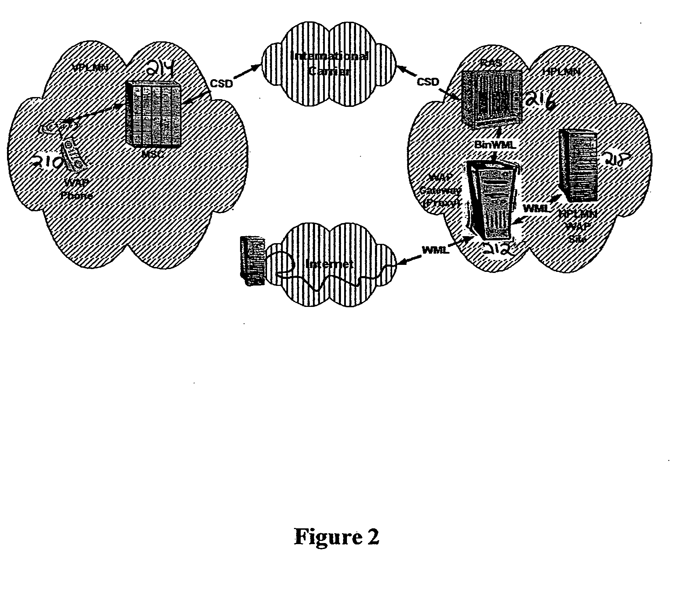

In a roaming scenario further limitations arise. Currently WAP roaming is based on a WAP gateway proxy at the home network site. Figure 2 shows the typical WAP/circuit switched data (CSD) roaming architecture. The mobile unit, such as a WAP phone 210, is located in a visited public mobile network (VPMN). Network access is provided to the WAP phone 210 by a WAP gateway 212 physically located in the WAP phone 210's home public mobile network (HPMN). The WAP phone 210 is preconfigured to place a mobile operator CSD call according to the setup burned into it during production or by the network operator. A typical setup includes the following parameters:

| | |
|---|---|
| Dial-up Number: | +4113806777 |
| User Name: | star |
| Authentication type: | Normal |
| Password: | home |
| Homepage: | http://wap.starhome.com |
| IP Address: | 190.190.10.170 |
| IP Port: | 9201 |
| Bearer: | Data |
| Data call speed: | 9600 |
| Connection type: | Temporary |
| Connection Security: | Off |
| Inactive/idle timeout: | 300 |
| Response time: | 150 |
| Dial type: | ISDN |
| Show images: | Yes |

The call flow begins with an international data telephony connection initiated by a user agent, such as a Mobile Switching Center (MSC) 214, to the dial-up number. After an optional authentication phase, the user receives a dynamically allocated HPMN private Internet protocol (IP)address from the Remote Access Server (RAS) 216 or from the Remote Authentication Dial-In User Service (Radius) server located in the home network. A Radius server is an authentication and accounting system used by many Internet Service Providers (ISPs). Radius is an unofficial standard used by many authorization servers to check that users accessing data services via ISPs have provided accurate information and to authorize device access to ISP systems.

Once the session is created, a Radius accounting packet is sent from the RAS 216 to the WAP gateway 212. This packet includes the dynamically allocated IP address and the user Mobile Station International Subscriber Directory Number (MSISDN). The user is recognized in the system in this phase. At the same time, the user agent receives its given IP address back at the phone and starts initiating requests.

Routing the call through the home network is costly to the user, as the roaming data user is obliged to pay long distance or international telephony charges in addition to any other charges for data services. However, in most cases, even that simple yet costly configuration does not work because digital calls are not supported internationally, whilst digital calls are the default setup for WAP access. Another difficulty may appear when MSISDN is required for authentication or billing by the RAS 216 or WAP gateway 212 while the calling line identifier (CLI) is not delivered over international links, such as ISUP/SS#7 links.

Additional problems arise when the phone is configured to dial a short code rather than an international number. Operators commonly use this setup for differentiated billing and/or network topology considerations, for example to ensure that users always access the physically closest RAS.

Additional drawbacks of the CSD architecture are inefficient access to data service applications, lower performance of these applications, and relevancy of the provided information. If the content server is local (in the VPMN or geographically close to the VPMN), a so-called tromboning scenario is created. The session is CSD tunneled to the HPMN and, after WAP conversion, returns to the VPMN through the Internet. If the application resides on a third domain, such as an international public land mobile network (IPLMN), the session is routed from the VPMN via the HPMN and then to the IPLMN, instead of directly from the VPMN to the IPLMN. In either case, the information provided to the user is not oriented to visitors and is not updated according to the visitor's current location and needs. In some cases, such as traffic, weather, and local activities, the information may be irrelevant.

General Packet Radio Service (GPRS) mobile operators, while not suffering from the same routing difficulties facing CSD mobile operators, have difficulty providing convenient data service access to their subscribers. Subscribers are routed to a single site, and cannot access a wide variety of data services through the mobile operator.

In PCT/EP98/04343 published as WO99/04582A there is described a visitor portal and system according to the preamble of claims 1 and 7. More specifically, WO99/04582A speaks of a mobile station (MS) for a digital cellular communication network (GSM) supporting WWW services comprises a receiver (4) for broadcast information transmitted from at least one base station subsystem (BSS 1; ... ; BSS 5), a location data filter (6) adapted to select location specific data from the received broadcast information, and a mobile device interface (8) adapted to establish a connection to a mobile device (MD) being connected to the mobile station (MS), to receive a request for the location specific data from the mobile device (MD) and to transfer the location specific data to the mobile device (MD). The transfer of location specific data to a server being linked to the mobile device via a global data bearer services network allows for the provision of location dependent WWW services at the mobile device (MD.

PCT/GB98/01056 published as WO 98/47295A speaks of a method of selecting information sources from which information is provided to users via a telecommunications system, said method comprising: tracking the location of a user in the system by receipt of tracking information for said user; accessing location data indicating localities in which information from the respective sources is deemed to be relevant; generating a shortlist of information sources for said user on the basis of said tracking information and said location data; and transmitting said shortlist to a terminal associated with said user so as to allow said user to select an information source of interest and thereby to access information from said source.

PCT/SEOO/02519 published as WO 01/43361A describes a network portal that has a so called "roaming function" which identifies the place where the user is and loads home local information adapted to the user's profile of interest. This means that when log-in is made in another place than where the home server is, the portal is adapted to the at present current local network.

A need exists for a cellular data communication method that will provide roaming users with seamless access to data services throughout the accessible data network, and which will provide roaming users with relevant information based on both their current location and home network. The method should also ensure that the data communication is efficiently routed.

### Summary of the Invention

According to the present invention there is provided a local visitor portal for supporting data communication from roaming mobile telephony devices roaming at a non-home cellular network. The mobile telephony devices are associated with respective home cellular networks and with respective service profiles. The local visitor portal comprises a page generator for generating for the devices respective visitor portal pages and a respective visitor portal pages which are configured according to the service profiles. The local visitor portal further comprises a first interface for allowing the non-home cellular network to intercept data communication sessions of the mobile telephony devices and directing the data communication sessions to the respective visitor portal pages on the non-home cellular network via a second interface, thereby to support data communication sessions at the non-home cellular network with the devices via the respective visitor portal pages.

Preferably, the non-home network is configured through the first interface to connect the mobile telephony device to the local visitor portal upon initiation of a data session by the mobile telephony device.

Preferably, the mobile devices are configured to perform CSD or GPRS communication.

Preferably, the page generator is configured to generate the respective visitor portal page in accordance with one or more of the following: the home network of the device, the network in which the device is currently roaming, and a user profile associated with the device, and roaming information associated with the user profile.

Preferably, the visitor portal page contains links to one or more of a group that comprises: bookmark requests, a non-home user page, a mobile device home page, a home network page, a location based page, an Internet access page, a corporate access page, a search engine, and an e-mail service.

Preferably, the local visitor portal comprises one or more visitor page templates. The page generator is configured to generate a visitor portal page by insertion of information associated with a mobile device into one of the templates. According to another embodiment of the present invention there is provided a system for supporting roaming data communication. The system comprises a network having home users and non-home users and a local visitor portal for non-home users. The system is operable to intercept a sessions of the non-home users, via a first interface, and direct it to the local visitor portal, via a second interface , the local visitor portal providing user selectable access to a plurality of services. The local visitor portal is configured for generating for the non-home users respective visitor portal pages which are configured according to service profiles, the respective visitor portal pages are configured for supporting the sessions.

Preferably, the local visitor portal is located at the network.

Preferably, each one of the visitor portal pages contains links to one or more of a group that comprises: bookmark requests, a non-home user page, a mobile device home page, a home network page, a location based page, an Internet access page, a corporate access page, a search engine, and an e-mail service.

### Brief Description of the Drawings

For a better understanding of the invention and to show how the same may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
Figure 1 shows data communication according to the client server model and using typical WAP architecture.
Figure 2 shows data communication with WAP/CSD roaming architecture.
Figure 3 is a simplified block diagram of a preferred embodiment of a cellular data communication interfacing apparatus for supporting cellular data communication.
Figure 4 shows a preferred embodiment of an interfacing apparatus with a mobile device configurer.
Figure 5 is a simplified block diagram of a preferred embodiment of a visitor portal.
Figure 6 is a simplified block diagram of a preferred embodiment of a WAP/CSD roaming scenario with an interfacing apparatus.
Figure 7 is a simplified block diagram of a preferred embodiment of a network for supporting roaming of mobile communication devices between a plurality of mobile networks.
Figure 8 is simplified flow chart of a preferred embodiment of a method for supporting cellular data communication between a mobile telephony device roaming within a visited mobile network, and a data service.

### Description of the Preferred Embodiments

Current methods for providing data access to mobile telephony users outside their home networks are inadequate. In most CSD mobile networks today, all data traffic to and from a roaming cellular telephone is routed through a WAP gateway in the device's home network. In addition to creating a cumbersome, expensive, and generally inefficient routing, this also causes the mobile device to appear to be located within the home network. A user accessing data services through a cell phone may therefore be provided with irrelevant information. Network servers should provide information which is relevant to the user's actual location, while continuing to identify the mobile device correctly in order to provide services the device is authorized to access.

An additional problem facing mobile network operators today is to provide a wide variety of data services to users. These value added services are very important for attracting and maintaining a customer base. Data services, such as commercial services, emergency services, email, native language customer assistance, global short code access, bookmark access, and short message services, are commonly provided to mobile devices. Providing these services to roaming mobile devices can be complex, as a distinction must be made between services that require information from the home network, such as bookmark and email access, and services that require information from local services such as taxi and weather information.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

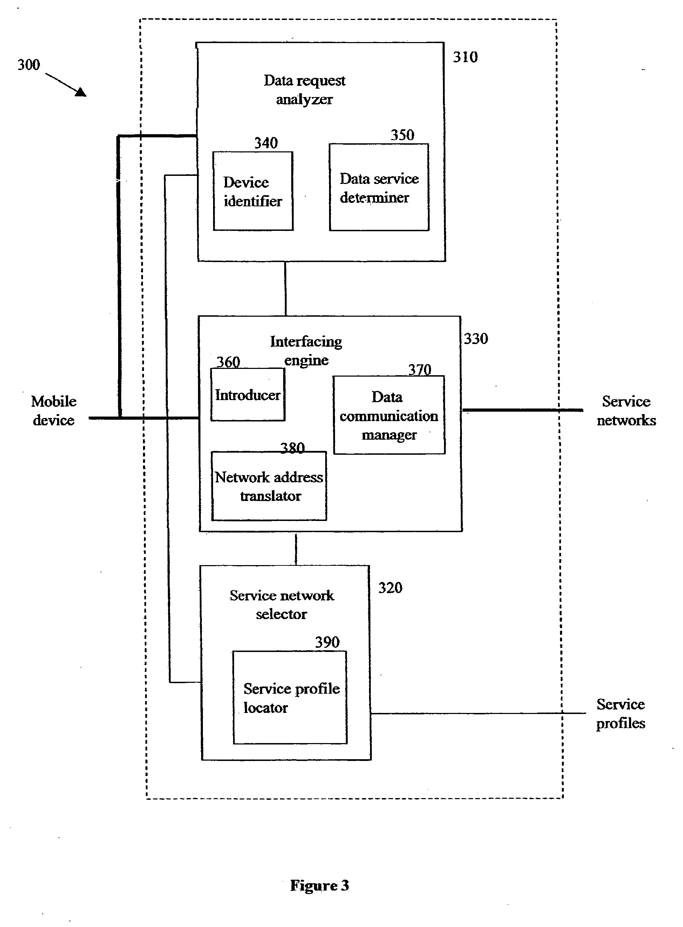

Reference is now made to Figure 3, which is a simplified block diagram of a preferred embodiment of a cellular data communication interfacing apparatus for supporting cellular data communication to one or more roaming mobile telephony devices. Each roaming mobile telephony device is associated with a home mobile network. Each roaming mobile device is also associated with a service profile, which specifies various service networks which provide data services to the mobile device. The service profile may include a user profile specifying preferences and information of the mobile device user. The service profile may also include one or more community profiles, listing preferences and information of groups the mobile device user is a part of, such as corporate affiliation or demographic segmentation. Interfacing apparatus 300 comprises data request analyzer 310, which analyzes requests for data services received from the mobile devices, service network selector 320 which selects service networks to provide the requested services to the mobile devices, and interfacing engine 330, which manages data communications between the mobile devices and the selected service networks. When a data service request is received from a mobile device, the request is analyzed by data request analyzer 310. Then service network selector 320 selects the service network for each data request based on the results of the request analyses performed by the data request analyzer 310 together with the mobile device's service profile. Interfacing engine 330 next introduces the mobile devices to the identified service network, and directs communications between the mobile device and the service network. Interfacing engine 330 forwards data requests from the mobile device to the network servers of the service networks, and directs corresponding data responses from the network servers to the requesting roaming mobile devices. Data services may be provided to the mobile device by the visited network, the device's home network, or by a third network having connectivity to the visited network serving the mobile device.

Interfacing apparatus 300 may serve mobile devices having various mobile communication protocols. In one preferred embodiment, the data communication protocol consists of CSD communications. Alternately, data communications may be GPRS communications. Interfacing apparatus 300 may be configured to operate with more than one protocol in parallel. Different preferred embodiments described below are applicable to different technologies, according to technological needs and constraints. The above applies to similar embodiments described below.

In the preferred embodiment, interfacing apparatus 300 operates within a mobile telephony network which provides data services to roaming mobile telephony devices. Alternatively, interfacing apparatus 300 may serve several mobile operators. For example, interfacing apparatus 300 may serve as a country gateway that serves all mobile operators of a country. The above applies to similar embodiments described below. The mobile telephony device may be a WAP or WAP compatible device. Such devices include devices using MHTML, CHTML, and SHTML protocols. In the preferred embodiment the mobile device is CSD mobile device. Mobile devices include mobile telephones, portable computers, and PDAs.

Interfacing apparatus 300 may be located in any place having connectivity to the service networks and to the visited mobile network serving the device. In the preferred embodiment, interfacing apparatus 300 is located in the visited network serving the roaming mobile device. In a further preferred embodiment, an interfacing apparatus 300 is located in both service and visited networks and is linked by a private or public data network. A configuration of interfacing units connected by a private network enables the monitoring and control of data routing, and simplifies the provision of user services such as billing and quality of service management. In an alternate preferred embodiment, the interfacing apparatus 300 is located in a service network.

In the preferred embodiment, data request analyzer 310 comprises device identifier 340 and data service determiner 350. An incoming data request to the interfacing apparatus 300 is analyzed by the data request analyzer 310 to extract information and parameters. Device identifier 340 uses data request parameters to identify the device which sent the data request. The parameters used may include: MSISDN, mobile device home page, APN, and CLI. These parameters may be used either separately or in combination to derive the device identity. The data service determiner 350 analyzes the request parameters to determine the requested data service.

The results of the request analyses are utilized by service network selector 320 to determine the service network the data request should be directed to. Service network selector 320 uses the device identity to locate the device's service profile. The service profile indicates the service network which provides the requested service to the device. The service network selector 320 may use additional criteria to select the service network, including the identity of the interfacing apparatus serving the mobile device, and the device location. The above applies to similar embodiments described below. In a preferred embodiment, service network selector 320 comprises a service profile locator which locates the service profile. The service profile may be located anywhere having connectivity to the interfacing apparatus 300, for example within the interfacing apparatus 300, the mobile device, or in a database on the home network, visited network, or any other connected network.

Interfacing engine 330 manages communication between the mobile device and the selected service network. In the preferred embodiment, interfacing engine 330 comprises introducer 360 and data communication manager 370. After service network selector has determined a service network corresponding to a data service request, communications are initiated between the mobile device and the service network when introducer 360 introduces the mobile device to the selected service network.

Data communication manager 370 then manages data communication between the mobile device and the network server. The interfacing engine 330 transmits the data requests from the mobile device to the selected service network servers. Communication need not pass through the home network, and a tromboning scenario is avoided. Data responses from the service network may also bypass the home network and be forwarded to the mobile device by the interfacing apparatus 300.

Some service networks assign private network addresses. When service networks allocate a private network address, network address translation may be necessary to ensure proper data communication. In the preferred embodiment, interfacing engine 330 further comprises a network address translator 380 for performing network address translation. Network address translator 380 comprises a visited network address determiner, a service network address determiner, and a readdresser. Visited network address determiner determines the visited network address allocated to the mobile device. This address is used to direct data responses received from network servers back to the mobile device. In the preferred embodiment, the visited mobile network allocates the visited network address to the mobile device. In an alternate preferred embodiment the data communication manager 370 comprises a network address allocater for allocating a visited network address to the mobile device. Service network address determiner determines the service network address allocated to the mobile device by the service network. The service network address can be assigned to the mobile device by the interfacing apparatus 300 from a pool of addresses, and sent to the service network authorization server. The readdresser is responsible for performing the address translation on the data requests and responses managed by the interfacing engine. When network address translation is being performed, the readdresser replaces an originating network address of a data request with the device service network address, and replaces a destination network address of a data response with the device visited network address.

Some data services require device authorization or authentication before they may be accessed by a mobile device. In a preferred embodiment, device identifier 340 further comprises a home network identifier to identify the device's home network. Home network identifier identifies the mobile device's respective home network from at least one parameter received with the data request. These parameters may include: the MSISDN, the mobile device home page, APN, and CLI. The home network address may be required in order to correctly identify the device to the home network, for example when requesting authorization or authentication of the roaming device. The home network server may be queried before access is allowed to some home network services and for mobile device authentication.

In a further preferred embodiment, introducer 360 performs data service accounting functions. According to the preferred embodiment, after the service network has been selected introducer 360 defines a data service user. If authorization is required for the data system user, introducer 360 obtains authorization for the user. Once a user is eligible to use a data service, introducer 360 sends a broadcast to the service network. The broadcast may include a list of services the data service user may access. Introducer 360 monitors the data service user activity, and maintains an account for the user. When the data service user closes a data session, introducer 360 sends a corresponding broadcast to the data service network. The accounting records can be used to bill or credit the user for services used during the session, to monitor client activity, and for other account management purposes. The above applies to similar embodiments described below.

In a preferred embodiment, service network selector 320 is further operable to identify a service network authorization server, such as a Radius server, of the mobile communication device. In the preferred embodiment, the introducer 360 is further operable to query the service network authorization server to authorize and/or authenticate the data communication. Authorization and/or authentication may be performed only when a mobile device initiates a data session, or at any time during the data session.

In a preferred embodiment, the interfacing apparatus 300 further comprises a visitor database for storing properties associated with mobile devices roaming within a mobile network. The device service profile may be stored in the database, and be accessed from the database by the interfacing apparatus 300. Properties that may be stored in the database for a given mobile device include: service profile, visited network name, visited network location, home network address, visited network address, service network address, community profiles, and a user profile for a user of the device. The database may also store the interfacing apparatus serving the mobile device. When a roaming mobile device logs on to a network, information may be gathered about the device and stored in the database, either for the duration of the session or for a predetermined time period. In the preferred embodiment, the information in the database is used by components of the interfacing apparatus 300, including the service network selector 320 and the network address translator 380. The abovementioned components use the information stored in the database to perform their required functions.

When a data request is received by the interface from a given mobile device the request is analyzed by the data request analyzer 310 to determine the device's identity and the data service requested by the device. The format of the data service request may be one of a group of formats, including: WAP data, standard data, and secure data. In a preferred embodiment the data request format comprises IP data. The service network selector 320 then determines the appropriate service network to provide the data service to the device, based on the device service profile and possibly other factors as described above. If necessary, authorization and/or authentication of the device are obtained from the service and/or home networks. The interfacing engine 330 determines if the service network has assigned a private network address to the device. If a private network address was not assigned to the device, the interfacing engine 330 forwards the data request to the requested service network server with no further processing. The service network server receives a data request from a mobile device having a network address within the visited mobile network and returns its responses accordingly. The interfacing apparatus 300 receives the data response from the network server and forwards it on to the requesting mobile device. If a private network address was assigned to the device, the data request is network address translator by network address translator 380 before being forwarded to the requested service network server. The data request is recognized by the service network as originating from the correct mobile device, and given access to sites and services to which the mobile device is entitled. The reverse process occurs when the interfacing engine 330 receives a data response from a service network server with a private service network address. Interfacing engine 330 replaces the device's service network address with the device's visited network address, and forwards the data response to the roaming mobile device. Typically, the device home network is not part of the data communication pathway.

A requested network server may be located in various locations within the accessible data network. The data service may be accessible via the visited mobile network, the home mobile network, or a third mobile network. Additionally, the network server may be within the Internet, or a private network, such as a corporate network.

In the preferred embodiment the data communication manager 370 comprises further components operable to implement additional interfacing functions. In the preferred embodiment the data communication manager 370 comprises a session manager operable to create and terminate a data communication session.

In the preferred embodiment, the data communication manager 370 is further operable as a router. In a further preferred embodiment, the data communication manager 370 is further operable to perform location and identity based routing of the data communication.

In the preferred embodiment the data communication manager 370 comprises a quality of service manager for managing quality of service (QoS). In a further preferred embodiment the data communication manager 370 comprises a billing manager for managing billing. The quality of service manager and/or billing manager operate in conjunction with the mobile device's quality of service manager, billing manager, and/or Radius server in the home network.

In the preferred embodiment the data communication manager 370 comprises a network protocol converter for converting a data request having an incompatible protocol into a predetermined network protocol. In the preferred embodiment the network protocol converter converts the network protocol of the data communication between Wireless Transaction Protocol (WTP) and HyperText Transfer Protocol (HTTP).

In the preferred embodiment the data communication manager 370 comprises a rerouter for rerouting a preliminary data request having a mobile telephony protocol to a mobile telephony node. The mobile telephony node converts the preliminary data request into a data request having a predetermined network protocol and to return the data request to the interfacing apparatus 300. In one preferred embodiment the rerouter reroutes a CSD data request to an RAS, which converts the request to an IP protocol and returns the request to the interfacing apparatus. Interfacing apparatus may alternately comprise RAS and/or GGSN (Gateway GPRS Support Node) functionality. In an alternate preferred embodiment interfacing apparatus 300 comprises telephony protocol converter for converting a preliminary data request with a CSD transport IP protocol to local area network (LAN) IP protocol. The above applies to similar embodiments described below.

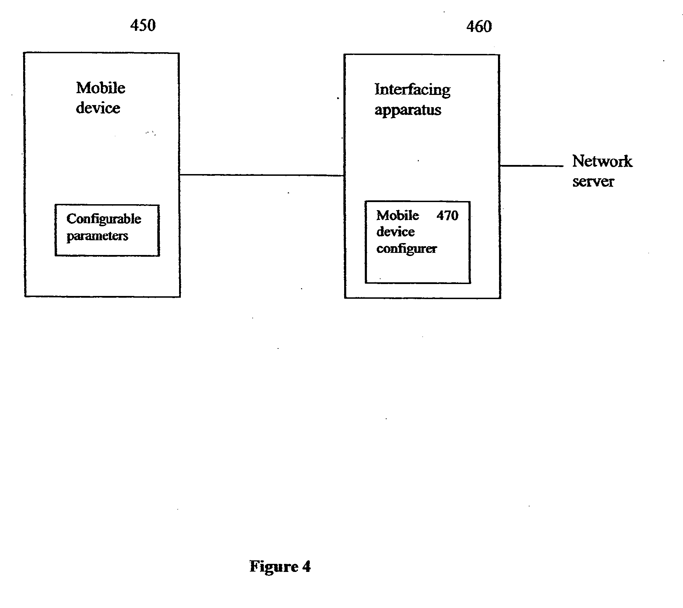

Reference is now made to Figure 4, which shows a preferred embodiment of an interfacing apparatus with a mobile device configurer. In the preferred embodiment, the interfacing apparatus 460 further comprises a mobile device configurer 470 for configuring mobile telephony devices. Typically, a mobile device memory contains configurable parameters that ensure that a call is processed correctly by both the home and visited networks. Mobile device configurer 470 remotely configures the values of parameters within the mobile device. In the preferred embodiment, the mobile device configurer configures the device with an access code for directing data requests to the interfacing apparatus 460. The access code may comprise one of a group including: a WAP short code, an APN, a country code, a corporate code, an identity based code, and a network address.

A mobile phone user logging to a data service is often automatically logged on to a homepage preconfigured in the mobile device. The preconfigured homepage may not be suitable for a roaming user located outside the home network. For example, local time, weather, entertainment, and other services may be irrelevant. The user, however, may still require access to some local services such as email, and corporate sites. As described below, a visitor portal may provide a roaming mobile device with access to these services.

In the preferred embodiment the interfacing apparatus further comprises a visitor portal operable to connect the mobile device to a visitor portal page associated with the device. The mobile device may be connected to the visitor portal when a data session is initiated. The visitor portal page contains links to sites relevant to a specific user of a mobile device, from a specific home mobile network, visiting a specific visited mobile network.

In a first preferred embodiment the visitor portal is a part of an interfacing apparatus. A second preferred embodiment comprises a stand-alone visitor portal, where the mobile device accesses a mobile network and is directed to the visitor portal by the mobile network. The mobile network may direct all roaming users automatically to the visitor portal, or the mobile device may dial a special access code to reach the visitor portal. In the stand-alone embodiment, the visitor portal can provide support to all types of roaming mobile devices, including both CSD and GPRS devices.

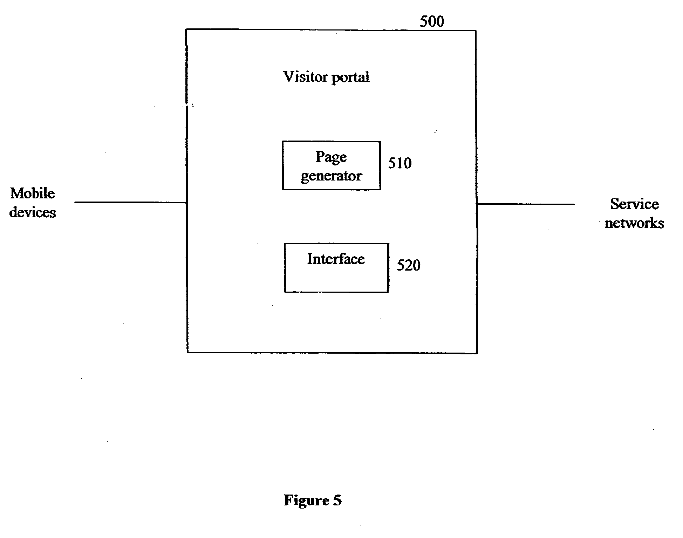

Reference is now made to Figure 5, which is a simplified block diagram of a preferred embodiment of a visitor portal 500. Visitor portal 500 comprises page generator 510 which generates the visitor portal pages, and interface 520 which directs each mobile device to the device's visitor page.

The visitor portal 500 generates a visitor portal page for the specific mobile device, taking into account a number of factors. These factors may include: the device service profile, the device's current location, the visited network, the location of the visited network, the device's home network, etc. The device location may be determined from a number of factors, including the visited network location, and/or the identity of an interfacing apparatus providing service to the mobile device. The service profile may contain a user profile and/or community profiles associated with the device. In the preferred embodiment, the visitor portal page contains links to at least one of a group comprising: bookmarks, a mobile device home page, a home network page, a visited mobile network page etc, a location based page, an Internet access page, a corporate access page, a search engine, and an e-mail service. The bookmarks may be dynamically chosen by the subscriber, and may include data services requested by the mobile device. In a preferred embodiment, the visitor pages are generated from one or more templates stored in the visitor portal. The device specific information is inserted into a template to create a visitor template appropriate for a given device.

The visitor portal 500 can tailor the visitor portal page associated with each mobile device in order to suit needs of every type of roaming user, such as private users, small office/home office (SOHO) users, and corporate users requiring access to WAP enabled (and WAP compatible) corporate applications. The visitor portal 500 can also tailor the visitor portal page according to user community affiliations. Advertising and other user and community oriented notices can be inserted into the visitor portal page generated for each device. The visitor portal 500 preferably provides users with seamless service to their WAP phones without requiring any change of phone setup.

In the preferred application the visitor portal page generated for private and SOHO users may contain links to the user's home page in the home network, a VPMN related visitor page (preferably in the travelers native language), bookmarks, and Internet access. Corporate users may be additionally provided access to a corporate portal. The visitor portal page content is composed of various data sources collected and integrated by the interfacing apparatus and the visitor portal 500. The interfacing apparatus may provide the visitor portal 500 with network addresses required for generating a visitor portal page for a mobile device.

The network address of the mobile device's home page may be determinable from the configuration of the mobile phone. If the home page server resides in the home network, the session is transferred to the HPMN by the interfacing apparatus. If the home page resides on the Web, the data session is routed to the Internet by the interfacing apparatus to avoid a tromboning scenario.

The visitor network page may be a local site targeted for visitors, chosen by the visited network as a portal for traveler information service. The visitor network page can be in the domain of the visited network or on the Internet, and may be provided and maintained by the VPMN or by local partners. In the preferred embodiment, the visitor portal 500 obtains the network address from the visited network, and maintains it in a database. The database may also contain an identification of the visitor's preferred language, with the default determined by the MSISDN. The home network may have a corresponding page for its roaming users.

In the preferred embodiment, the mobile device is provided with Internet access through an ISP in either the visited or home mobile networks, or by routing through the interfacing apparatus.

The visitor portal 500 provides the corporate/VPN user with access to corporate resources through the interfacing apparatus. For a corporate private network accessible via the home network, the session is routed by the interfacing apparatus to the home network as described above. In the case of a global corporation with a worldwide presence, the interfacing apparatus may connect the mobile device to the nearest and/or fastest entry point into the corporate VPN. Access to a corporate network can be via the Internet or a dedicated corporate link. For secure corporate WAP applications, access may be through a private WAP gateway. The visitor portal database may store the VPN/corporate network address (URL), connection type, and the nature of the user's association with the network.

In a preferred embodiment the interfacing apparatus database is operable to exchange information with databases of supporting interfaces within other mobile networks. Likewise, in a further preferred embodiment the visitor portal database is operable to exchange information with databases of visitor portals in supporting interfaces within other mobile networks.

The visitor portal 500 may also perform an introduction process, similar to the one described above for the interfacing apparatus. The visitor portal 500 may comprise introducer functionality of its own, or may utilize the introducer in the interfacing apparatus. The above applies to similar embodiments described below.

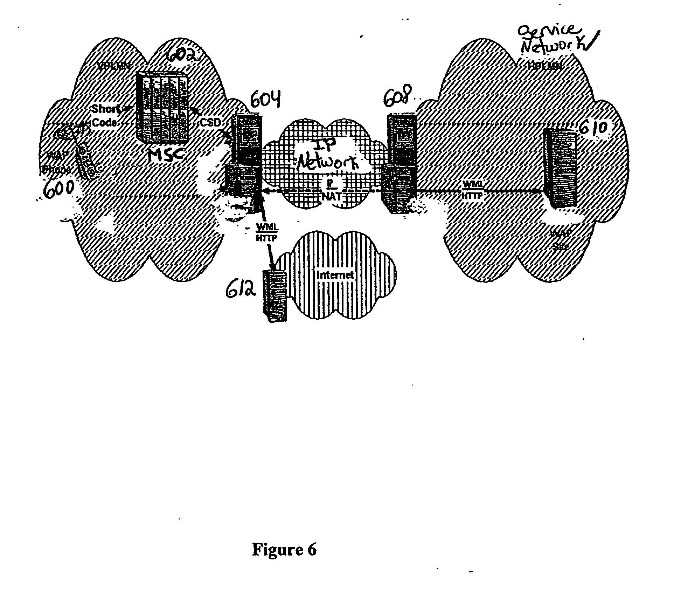

Reference is now made to Figure 6 which is a simplified block diagram of a preferred embodiment of a WAP/CSD roaming scenario with an interfacing apparatus as described above. In the embodiment of Figure 6, an interfacing apparatus is located in both the VPMN (interfacing apparatus 604) and the Service network/HPMN (interfacing apparatus 608) linked by an IP network. For the remainder of the description of Figure 6 Service network/HPMN will be assumed to be the HPMN.

Initiating the data request, WAP phone 600 dials a WAP short code, which is configured as its dial-up number. The VPMN mobile network is configured to route the packets from WAP phone 600 through the interfacing apparatus 604. Accordingly, MSC 602 connects non-home mobile devices dialing the short code number to interfacing apparatus 604. Interfacing apparatus 604 allocates a local private IP address to both the WAP gateway and user agent, and terminates the CSD leg.

Interfacing apparatus 604 converts the call protocol for CSD to IP protocol, and creates a different, IP based, preferably using the standard HTTP 1.1 protocol. The WAP phone 600 does not automatically connect the interfacing apparatus 604 to the WAP proxy in WAP phone's home network. Instead, the interfacing apparatus 604 analyzes the call from the WAP phone 600, determines the device identity and required data services, and then uses the information to determine a data service network according to the device service profile. The interfacing apparatus 604 then connects the WAP phone 600 directly to the URL of the data service network server 610, and manages data communications between the device and the service network until the device exits the data service. The interfacing apparatus may connect to an outside portal on the Internet 612. Alternately, the mobile device may be connected to a visitor portal, as described above, with the requested data service listed as a link in the visitor portal page.

Since the WAP gateway in the HPMN may be bypassed during some data communication, in the preferred embodiment interfacing apparatus 604 additionally performs other WAP gateway functions required for proper data communications. Specifically, interfacing apparatus 604 comprises a protocol converter for converting between WTP and HTTP. In case of a secured WAP site (WTLS) the WAP router will not convert the packets if the site specifically requires conversion by a local gateway, and only the routing and/or NAT capabilities of the interfacing apparatus 604 are used.

In the preferred embodiment, the interfacing apparatus 604 additionally comprises a quality of service manager and billing manager.

In order to access home services, the user of the roaming mobile device must be able to access the HPMN IP backbone. The interfacing apparatus 604 embedded NAT capabilities eliminate the match-up problem of different private IP domains and addresses of various operators. Interfacing apparatus 604 analyzes parameters received with the incoming WAP/CSD call to determine the required HPMN. Such parameters include the CLI obtained from the RAS functionality in interfacing apparatus 604. When WAP phone 600 sends a data request to a data service on the HPMN, interfacing apparatus 604 performs NAT to translate the originating address of the data request to the home network address of the WAP phone. Data services on the HPMN therefore identify the WAP phone correctly.

In the preferred embodiment, if the upper level application is not WAP (for example GSM modem), or is targeted to a secured site, the interfacing apparatus 604 operates as a simple router.

The architecture illustrated in Figure 6 is backward compatible with any existing WAP infrastructure at the HPMN, regardless of the WAP gateway vendor. Even if the WAP gateway at the HPMN is implemented as a proxy, and a user wants to access home services, the session can bypass the HPMN WAP gateway because the WAP conversion is performed at the VPMN, and therefore continues as a regular IP session in the HPMN.

In the preferred embodiment, the mobile device is configured to direct roaming data communications to a preselected interfacing apparatus, which operates substantially as the interfaces described above. The mobile device is associated with a service profile which specifies service networks providing data services to the device. The device configuration may be entered when the device is manufactured, by a distributor of the device, or when the device accesses to a network. In the preferred embodiment the device is remotely configurable. For example, a roaming device logging on to a visited network may be remotely configured with an access code. In the preferred embodiment the device configuration includes a predetermined access code, such as a predetermined access address, a predetermined APN, a WAP short code, a country code, a corporate code, an identity based code, or a network code. Transmission of the data request with the access code ensures that the mobile network identifies the data request as a roaming data request, and directs the data request to the interfacing apparatus.

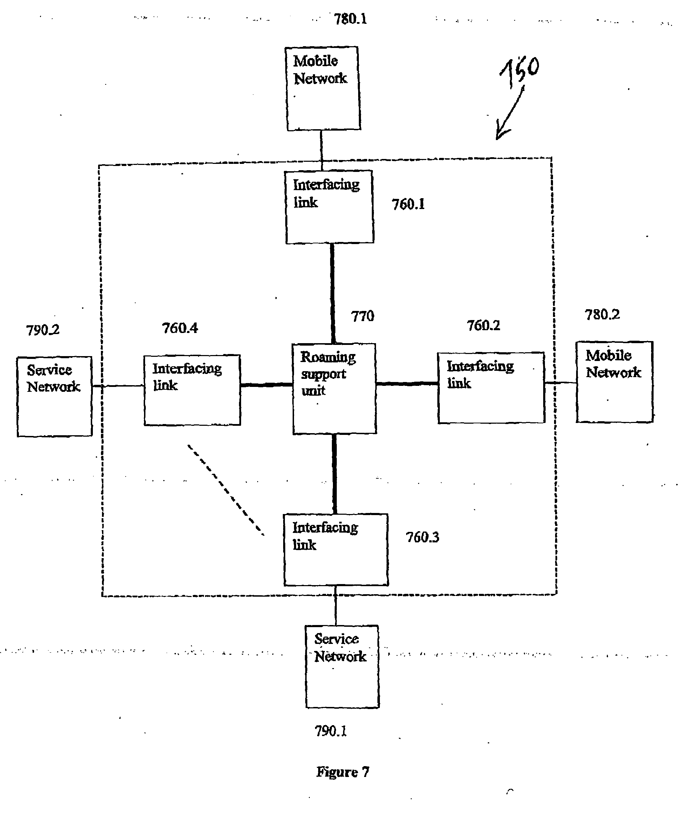

Reference is now made to Figure 7 which is a simplified block diagram of a preferred embodiment of a network for supporting roaming of mobile communication devices between at least one mobile network and at least one service network providing data services. Each of the mobile communication devices has a respective home network. Network 750 comprises interfacing links 760.1 to 760.n, and a roaming support unit 770 associated with the interfacing links. Each of the mobile networks, 780.1 to 780.n, and each of the service networks, 790.1 to 790.n, is associated with a respective interfacing link. Mobile networks may function as service networks, and provide data services to mobile devices. The number of interfacing links, service networks, and mobile networks in the figure is for illustration purposes only, and may comprise any number greater than one.

The roaming support unit 770 provides data regarding the roaming mobile devices to a respective interfacing link. In a preferred embodiment the network further comprises a database for storing properties associated with the mobile devices, such as the device service profiles. In a further preferred embodiment the database is operable to store the home data.

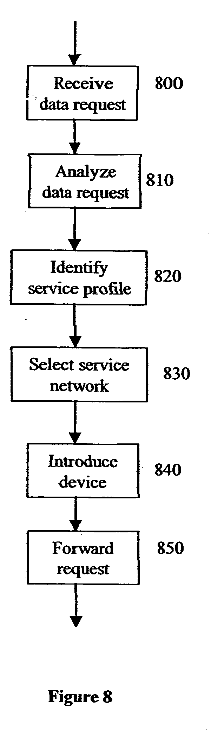

Reference is now made to Figure 8 which is a simplified flow chart of a preferred embodiment of a method for supporting cellular data communication between a mobile telephony device roaming within a visited mobile network and a data service. The mobile device is associated with a home network and a service profile. In step 800 a data request for a data service is received from the mobile device. The data request designates a requested data service. Data services include: commercial services, emergency services, email, native language customer assistance, global short code access, bookmark access, and short message service. These data services may be provided by a plurality of networks. The data request protocol may comprise WAP data, standard data, or secure data. The data request is analyzed in step 810, to determine the required data service and to identify the mobile device which sent the request. In step 820, the service profile of the requesting device is identified. The device's service profile is used to select a service network corresponding to the required data service in step 830. In step 840 the mobile device is introduced to the service network. Finally, in step 850 the data request is forwarded to the service network. Thus the data request is forwarded directly to the service network, and need not be routed through the device home network unless the data service network server is located within the home network. Forwarding data responses from the service network to the mobile device is handled in an analogous manner. The data service may be provided by the home network, the visited network, or any other accessible network. The requested data service server may be located within the Internet, a corporate network, or a private network.

In a preferred embodiment, the identity of the mobile device is determined from at least one parameter received with the data request. The device identity may be determined from at least one of the following parameters: MSISDN, mobile device home page, APN, and CLI.

Network address translation may also be performed as necessary to facilitate data communication between the mobile device and the data service network server. A preferred embodiment further comprises determining a service network address assigned to the mobile device by the service network. If the assigned service network address is a private network address, network address translation may be required. A preferred embodiment further comprises determining if the service network address comprises a private network address, and performing network address translation if the service network address is private, to translate the originating network address of the data request from the device's visited network address the device's service network address.

In a preferred embodiment performing network address translation comprises the steps of: determining the visited network address, determining the service network address, and replacing the originating network address of the data request with the service network address.

In a preferred embodiment performing network address translation comprises the steps of: determining the visited network address, determining the service network address, and replacing a destination network address of the data request with the visited network address.

In a preferred embodiment, the method further comprises identifying a service network authorization server of the mobile device, such as a Radius server. Another preferred embodiment further comprises querying the service network authorization server to authorize the data request by the mobile device. Another preferred embodiment comprises identifying a home network and/or home network authorization server. The device home network may be identified from the device service profile, or from parameters received with data requests from the mobile device, such as CLI, APN, mobile device home page, and MSISDN. The home authorization server may be queried to authenticate the mobile device. The home network and/or service network may be queried only during initiation of a data session.

In a preferred embodiment, the method comprises allocating a visited network address to the mobile device.

In a preferred embodiment, the method comprises maintaining a visitor database for storing properties associated with the mobile device. The properties stored in the database may include: service profile, visited network name, visited network location, service network address, home network address, visited network address, community profiles, and a user profile. The user profile may be part of the service profile, and may specify user information and data service preferences. The data stored in the database may be used during other steps of the method. For example, the service profile, device network addresses, and home network may determined from the database.

In a preferred embodiment, the method comprises creating and/or terminating a data communication session for the mobile device.

In a preferred embodiment, the method comprises routing the data communication. In another preferred embodiment, the method comprises managing quality of service and/or billing.

In a preferred embodiment, the method comprises converting a data request having an incompatible protocol into a predetermined network protocol. For example, the request protocol may be converted between WTP and HTTP. A further preferred embodiment comprises rerouting a preliminary data request having a mobile telephony protocol to a mobile telephony node operable to convert the preliminary data request into a data request having a predetermined network protocol and to return the data request to the data interface.

In a preferred embodiment, the method comprises connecting the mobile device to a visitor portal page associated with the mobile device. The device may be connected to the visitor portal page when the device initiates a data session. The preferred embodiment further comprises generating the visitor portal page associated with each device. The visitor portal page generated for each device may vary depending upon the mobile phone location, the identity of the home and visited mobile networks, a service profile associated with the mobile device, and other factors. The visitor portal page may contain links to a variety of pages and services, such as: a mobile device home page, a home network page, a first mobile network page, a location based page, an Internet access page, a corporate access page, a search engine, and an e-mail service.

In a preferred embodiment, the method comprises configuring the mobile device.

The above-described embodiments address the difficulties currently facing WAP data users. Users of mobile telephones are efficiently connected to data services within the visited and home mobile networks, or elsewhere within the data network. Network servers preferably provide relevant, localized data, while still allowing seamless access to corporate servers. CSD data users are routed efficiently to the data service network. GPRS subscribers are provided with simple access to a wide range of data services. Subscribers enjoy seamless access to all portals and bookmarks, along with local information and corporate intranet access for VPN members. The visitor portal provides both WAP/CSD and WAP/GPRS mobile operators with a way to tailor the services and information provided to the needs of each subscriber.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

It will be appreciated by persons skilled in the art that the present invention is not limited to what has been particularly shown and described hereinabove. Rather the scope of the present invention is defined by the appended claims and includes both combinations and subcombinations of the various features described hereinabove as well as variations and modifications thereof which would occur to persons skilled in the art upon reading the foregoing description.

## Claims

1. A visitor portal (500) for supporting data communication from roaming mobile telephony devices (210) roaming at a non-home cellular network (214), said mobile telephony devices being associated with respective home cellular networks (216) and with respective service profiles, said visitor portal comprising:
a page generator (510) for generating for said devices respective visitor portal pages and **characterized by** respective visitor portal pages being configured according to said service profiles;
a first interface (300) for allowing said non-home cellular network (214) to intercept data communication sessions of said mobile telephony devices and directing said data communication sessions to said respective visitor portal pages on said non-home cellular network via a second interface (520), thereby to support data communication sessions at said non-home cellular network with said devices via said respective visitor portal pages.

2. A visitor portal according to claim 1, wherein said non-home network is configured through said first interface to connect said mobile telephony device to said visitor portal upon initiation of a data session by said mobile telephony device.

3. A visitor portal according to claim 1, wherein said mobile devices are configured to perform CSD or GPRS communication.

4. A visitor portal according to claim 1, wherein said page generator is configured to generate said respective visitor portal page in accordance with at least one of the following: the home network of said device, the network in which said device is currently roaming, and a user profile associated with said device, and user information associated with said user profile.

5. A visitor portal according to claim 1, wherein said visitor portal page contains links to at least one of a group comprising: bookmark requests, a non-home user page, a mobile device home page, a home network page, a location based page, an Internet access page, a corporate access page, a search engine, and an e-mail service.

6. A visitor portal according to claim 1, comprising at least one visitor page template, and wherein said page generator is configured to generate a visitor portal page by insertion of information associated with a mobile device into one of said templates.

7. A system for supporting roaming data communication, said system comprising a network having home users and non-home users and a visitor portal (500) for non-home users, **characterized by** said system being operable to intercept sessions of said non-home users, via a first interface (300), and direct to said them visitor portal (500), via a second interface (520), said local visitor portal (500) providing user selectable access to a plurality of services,
wherein said visitor portal (500) is configured for generating for said non-home users respective visitor portal pages being configured according to service profiles, said respective visitor portal pages being configured for supporting said sessions.

8. The system of claim 7, wherein said visitor portal is located at said network.

9. The system of claim 7 or claim 8, wherein each one of said visitor portal pages contains links to at least one of a group comprising: bookmark requests, a non-home user page, a mobile device home page, a home network page, a location based page, an Internet access page, a corporate access page, a search engine, and an e-mail service.

## Patentansprüche

1. Ein Besucherportal (500) für das Unterstützen der Datenkommunikation von roamenden mobilen Telefonvorrichtungen (210), die in einem zellulären Nicht-Heimnetzwerk (214) roamen, wobei die mobilen Telefonvorrichtungen mit entsprechenden zellulären Heimnetzwerken (216) und mit entsprechenden Dienstprofilen assoziiert sind, wobei das Besucherportal folgendes umfasst:
einen Seitengenerator (510) für das Generieren von Besucherportalseiten für die Vorrichtungen und durch entsprechende Besucherportalseiten **gekennzeichnet**, die gemäß den Dienstprofilen konfiguriert sind;
eine erste Schnittstelle (300), um zu ermöglichen, dass das zelluläre Nicht-Heimnetzwerk (214) Datenkommunikationssitzungen der mobilen Telefonvorrichtungen unterbricht und für das Leiten der Datenkommunikationssitzungen an die entsprechenden Besucherportalseiten über eine zweite Schnittstelle (520) in dem zellulären Nicht-Heimnetzwerk, um **dadurch** Datenkommunikationssitzungen in dem zellulären Nicht-Heimnetzwerk mit den Vorrichtungen über die entsprechenden Besucherportalseiten zu unterstützen.

2. Ein Besucherportal gemäß Anspruch 1, wobei das Nicht-Heimnetzwerk derart konfiguriert ist, dass es über die erste Schnittstelle die mobile Telefonvorrichtung mit dem Besucherportal nach Initiierung einer Datensitzung durch die mobile Telefonvorrichtung verbindet.

3. Ein Besucherportal gemäß Anspruch 1, wobei die mobilen Vorrichtungen derart konfiguriert sind, dass sie CSD- oder GPRS-Kommunikation durchführen.

4. Ein Besucherportal gemäß Anspruch 1, wobei der Seitengenerator derart konfiguriert ist, dass er die entsprechende Seite des Besucherportals gemäß wenigstens einem aus den folgenden generiert: das Heimnetzwerk der Vorrichtung, das Netzwerk, in dem die Vorrichtung zum aktuelle Zeitpunkt roamt und ein mit der Vorrichtung assoziiertes Benutzerprofil, sowie mit dem Benutzerprofil assoziierte Benutzernformation.

5. Ein Besucherportal gemäß Anspruch 1, wobei die Seite des Besucherportals Links zu wenigstens einem aus einer Gruppe enthält, die folgendes umfasst: Lesezeichenanfragen, eine Seite eines Nicht-Heim-Benutzers, eine Homepage einer mobilen Vorrichtung, eine Heim-Netzwerkseite, eine ortsbasierte Seite, eine Seite für den Zugang zum Internet, eine Seite für den Zugang zu einem Unternehmen, eine Suchmaschine und einen E-Mail-Dienst.

6. Ein Besucherportal gemäß Anspruch 1, das wenigstens ein Besucherseiten-Template umfasst, und wobei der Seitengenerator derart konfiguriert ist, dass er eine Besucherportalseite durch das Einfügen von mit einer mobilen Vorrichtung assoziierter Information in eines der Templates generiert.

7. Ein System für das Unterstützen von roamender Datenkommunikation, wobei das System ein Netzwerk umfasst, das Heim-Benutzer und Nicht-Heim-Benutzer aufweist und ein Besucherportal (500) für Nicht-Heim-Benutzer, **dadurch gekennzeichnet, dass** das System geeignet ist, Sitzungen der Nicht-Heim-Benutzer über eine erste Schnittstelle (300) zu unterbrechen und dann über eine zweite Schnittstelle (520) direkt an das Besucherportal (500) zu leiten, wobei das Besucherportal (500) einen durch den Benutzer wählbaren Zugang zu einer Vielzahl von Diensten bereitstellt,
wobei das Besucherportal (500) derart konfiguriert ist, dass es für die Nicht-Heim-Benutzer entsprechende Besucherportalseiten generiert, die gemäß Dienstprofilen konfiguriert sind, wobei die entsprechenden Besucherportalseiten derart konfiguriert sind, dass sie die Sitzungen unterstützen.

8. Das System gemäß Anspruch 7, wobei das Bescherportal in dem Netzwerk angeordnet ist.

9. Das System gemäß Anspruch 7 oder 8, wobei jede Seite des Besucherportals Links zu wenigstens einem aus einer Gruppe enthält, die folgendes umfasst:
Lesezeichenanfragen, eine Seite eines Nicht-Heim-Benutzers, eine Homepage einer mobilen Vorrichtung, eine Heimnetzwerkseite, eine ortsbasierte Seite, eine Seite für den Zugang zum Internet, eine Seite für den Zugang zu einem Unternehmen, eine Suchmaschine und einen E-Mail-Dienst.

## Revendications

1. - Portail de visiteur (500) pour supporter une communication de données provenant de dispositifs de téléphonie mobile itinérants (210) se déplaçant au niveau d'un réseau cellulaire non résidentiel (214), lesdits dispositifs de téléphonie mobile étant associés à des réseaux cellulaires résidentiels respectifs (216) et à des profils de service respectifs, ledit portail de visiteur comprenant :
- un générateur de pages (510) pour générer pour lesdits dispositifs des pages de portail de visiteur respectives et **caractérisé par** des pages de portail de visiteur respectives qui sont configurées conformément' auxdits profils de service;
- une première interface (300) pour permettre audit réseau cellulaire non résidentiel (241) d'intercepter des sessions de communications de données desdits dispositifs de téléphonie mobile et de diriger lesdites sessions de communications de données vers lesdites pages de portail de visiteur respectives sur ledit réseau cellulaire non résidentiel par l'intermédiaire d'une seconde interface (520), supportant de cette manière des sessions de communications de données au niveau dudit réseau cellulaire non résidentiel avec lesdits dispositifs par l'intermédiaire desdites pages de portail de visiteur respectives.

2. - Portail de visiteur selon la revendication 1, dans lequel ledit réseau non résidentiel est configuré à travers ladite première interface pour connecter ledit dispositif de téléphonie mobile audit portail de visiteur lors de l'initiation d'une session de données par ledit dispositif de téléphonie mobile.

3. - Portail de visiteur selon la revendication 1, dans lequel lesdits dispositifs mobiles sont configurés pour réaliser une communication CSD ou GPRS.

4. - Portail de visiteur selon la revendication 1, dans lequel ledit générateur de pages est configuré pour générer ladite page de portail de visiteur respective conformément à au moins l'un des éléments suivants: le réseau résidentiel dudit dispositif, le réseau dans lequel ledit dispositif est couramment itinérant et un profil d'utilisateur associé audit dispositif, et des informations d'utilisateur associées audit profil d'utilisateur.

5. - Portail de visiteur selon la revendication 1, dans lequel ladite page de portail de visiteur contient des liens vers au moins l'un parmi un groupe comprenant : des requêtes de signet, une page non d'accueil d'utilisateur, une page d'accueil de dispositif mobile, une page de réseau résidentiel, une page basée sur la localisation, une page d'accès à l'Internet, une page d'accès de société, un moteur de recherche et un service d'adresse électronique.

6. - Portail de visiteur selon la revendication 1, comprenant au moins un modèle de page de visiteur, et dans lequel ledit générateur de pages est configuré pour générer une page de portail de visiteur par l'insertion d'informations associées à un dispositif mobile dans l'un desdits modèles.

7. - Système pour supporter des communications de données itinérantes, ledit système comprenant un réseau ayant des utilisateurs résidentiels et des utilisateurs non résidentiels et un portail de visiteur (500) pour les utilisateurs non résidentiels, **caractérisé par le fait que** ledit système est utilisable pour intercepter des sessions desdits utilisateurs non résidentiels, par l'intermédiaire d'une première interface (300), et pour les diriger vers ledit portail de visiteur (500), par l'intermédiaire d'une seconde interface (520), ledit portail de visiteur local (500) fournissant à l'utilisateur un accès sélectionnable à une pluralité de services,
dans lequel ledit portail de visiteur (500) est configuré pour générer pur lesdits utilisateurs non résidentiels des pages de portail de visiteur respectives qui sont configurées conformément à des profils de service, lesdites pages de portail de visiteur respectives étant configurées pour supporter lesdites sessions.

8. - Système selon la revendication 7, dans lequel ledit portail de visiteur est situé au niveau dudit réseau.

9. - Système selon la revendication 7 ou la revendication 8, dans lequel chacune desdites pages du portail de visiteur contient des liens vers au moins l'un parmi un groupe comprenant : des requêtes de signet, une page non d'accueil d'utilisateur, une page d'accueil de dispositif mobile, une page de réseau résidentiel, une page basée sur la localisation, une page d'accès à l'Internet, une page d'accès de société, un moteur de recherche et un service d'adresse électronique.
